# EUROPEAN PATENT APPLICATION

(11) **EP 1 207 405 A2**
(43) Date of publication of application: **22.05.2002**
(21) Application number: 01402764.3
(22) Date of filing: 25.10.2001
(51) Int. Cl.: G01S 5/14

(54) **System for providing position information**

(30) Priority: 17.11.2000 JP 2000351771; 02.08.2001 JP 2001235456
(71) Applicant: Togasaka, Masanari, Niigata-shi, Niigata-ken (JP)
(72) Inventor: Togasaka, Masanari, Niigata-shi, Niigata-ken (JP)
(74) Representative: Maillet, Alain

(57) **Abstract**

The invention concerns a system for providing distance information in which a portable terminal (I) transmits its own positioning data obtained from a GPS receiver (5) to a central apparatus (21) via a communication system (22). The central apparatus (21) reads out course information pertaining to a golf course where a player (2) is playing from a course information stored in advance. Then, in relation to this specified course information, distances between the portable terminal (1) and preassigned registered points, for example pins, ponds, bunkers, etc. are transmitted to the portable terminal (1). Consequently, a player (2) holding the portable terminal (1) can determine his relative position to any point of the golf course, accurately and on a personalized basis.

## Description

The present invention relates to a system for providing position information that can appropriately obtain accurate position information for a person whilst on the move, such as for example a golf information providing apparatus for distributing a range of information on golf courses scattered at different localities around the country.

On golf courses recently, to cope with shortages of caddies, or alternatively for the purpose of work force reduction, improvement of efficiency and the like, the use of moving golf carts that can act as caddy replacements is gradually increasing. As an example of an operation control device of such a golf cart there is one disclosed, for example, in Japanese Unexamined Patent Publication No. 3-134715, wherein a Global Positioning System (referred to hereunder as GPS) receiver, in which a three dimensional position can be determined by time signals from satellites, is installed in each golf cart to control the status of the whole of a golf course in real time.

In the golf cart operation control device described above, a GPS receiver is installed in each golf cart so that the position of the golf cart and its front and back can be determined to a certain degree of accuracy. However, the golf cart itself can operate only on a road surface, and hence it is not possible to establish the relative position from a player in an area remote from the golf cart such as on a fairway, to a pin, a bunker or a pond in the vicinity.

However, in recent years as information on Internet websites has expanded on the WWW (World Wide Web), it is known that course layout plans of golf courses have become available. Therefore, if map data of such golf courses are obtained in advance, it is possible to establish the status of each course to some degree. However in this case, it is not possible to establish position relative to a pin for each shot, or position relative to a bunker or a pond in the vicinity during actual play. As described above, even if a person on the move can obtain map data of his surroundings, his position on the map and the distance to specific locations cannot be obtained immediately.

The object of the invention is to solve the abovementioned problem and more particularly to propose a system providing position information that can determine the distance from a current point to any point on the map data, accurately and on a personalized basis.

In order to achieve the aforementioned object, a first aspect of a system for providing position information of the present invention has a central apparatus capable of duplex communication with a portable terminal that is provided with a position detecting device for measuring a position thereof. This central apparatus is provided with a map data control device for storing and controlling map data of each location, and a distance information distribution device for, when its position information obtained by the position detecting device is transmitted from the portable terminal, calculating distance information from its position information to pre-assigned and registered points in the map data of each location stored by the map data control device, and sending the result to the portable terminal that transmitted the position information.

In this case, when its positioning data obtained by the position detecting device is transmitted to the distance information distribution device in the central apparatus from the portable terminal, the distance information distribution device reads out map data stored in advance and controlled by the map data control device, and distributes distances from its positioning data to assigned points to the portable terminal that transmitted the position information. Accordingly, a holder of the portable terminal can establish his relative position from his present point to each point in the map data stored and controlled by the map data control device of the central apparatus, accurately on a personalized basis.

Furthermore, a second aspect of the system for providing position information is characterized in that the position detecting device is a GPS receiver for measuring its position by receiving radio signals from satellites, which makes it possible for a GPS receiver user to obtain his own positioning data.

Moreover, a third aspect of the system for providing position information comprises a fixed GPS receiver that is installed at known coordinates and can receive radio signals from satellites, and this fixed GPS receiver is installed inside a specially designated area where error factors from the ionosphere, or atmospheric layers, and errors from selective availability are distributed almost uniformly. Furthermore, there is provided: a difference data calculation device for calculating a difference between positioning data obtained by the fixed GPS receiver and the coordinates of this fixed GPS receiver as positioning error, and a position information correction device for, based on this positioning error, correcting its position information transmitted from a portable terminal that is located within the specially designated area.

In this manner, there is a portable terminal that comprises a GPS receiver and a fixed GPS receiver installed at known coordinates in a specially designated area. Hence from positioning data obtained from the GPS receiver held by a user, error factors from the ionosphere, or atmospheric layers, and errors from selective availability are removed. As a result, when distributing distance information, it is possible to provide more accurate information on a personalized basis.

Furthermore, in a fourth aspect of the system for providing position information, the position information control device is a course information control device for storing and controlling course information of a golf course in each locality, and the distance information distribution device calculates distance information from its position information to pre-assigned and registered points in the course information of a golf course stored in the course information control device, and distributes the results.

In this manner, when positioning data obtained by the position detecting device is transmitted from the portable terminal to the distance information distribution device of the central apparatus, the distance information distribution device reads out course information of the golf course that is stored in advance and controlled by the course information control device, and distributes the distance from its positioning data to registered points in the course information of the golf course, such as pins, ponds or bunkers to the portable terminal that transmitted the position information. Accordingly, on each of the golf courses whose course information is stored and controlled in the central apparatus, a player holding a portable terminal can establish his relative position from the point at which he is playing to each other point on the golf course accurately on a personalized basis.

Moreover, in a fifth aspect of the system for providing position information , the position detecting device is a GPS receiver for measuring its position by receiving radio signals from satellites, and there is also provided a fixed GPS receiver that is installed at known coordinates and can receive radio signals from satellites, and this fixed GPS receiver is installed in a golf course in a specially designated area where error factors from the ionosphere, or atmospheric layers, and errors from selective availability are distributed almost uniformly. Furthermore, there is provided a difference data calculation device for calculating a difference between positioning data obtained by a fixed GPS receiver and the coordinates of this fixed GPS receiver as positioning error, and a position information correction device for, based on this positioning error, correcting its position information transmitted from a portable terminal that is located within the specially designated area.

In this case, from positioning data obtained from a GPS receiver held by a user, error factors from the ionosphere, or atmospheric layers, and errors from selective availability can be removed, and when distributing distance information, it is possible to provide information in yards on a personalized basis.

An eighth aspect of a system for providing position information of the present invention comprises: a central apparatus capable of duplex communication with a portable terminal that is provided with a GPS receiver for measuring its position by receiving radio signals from satellites, a fixed GPS receiver that is installed at known coordinates in a specially designated area where error factors from the ionosphere, or atmospheric layers, and errors from selective availability are distributed almost uniformly; and a difference data calculation device for calculating a difference between positioning data obtained from the fixed GPS receiver and the coordinates of this fixed GPS receiver as positioning error. The central apparatus is provided with; a corrected position information transmitting device for correcting position information transmitted from a portable terminal in the specially designated area based on the positioning error calculated by the difference data calculation device, and for transmitting this corrected position information to the portable terminal, and the portable terminal is provided with a map data storage device for storing map data of the specially designated area, and a distance information output device for calculating distances from the corrected position information to pre-assigned and registered points in map data stored by the map data storage device, and for outputting the results.

In this case, when position information obtained by a GPS receiver is transmitted from the portable terminal to a central apparatus via a communication system, the corrected position information transmitting device in the central apparatus, based on the positioning error calculated by the difference data calculation device, corrects the position information transmitted from the portable terminal and transmits this corrected position information to the portable terminal. On the other hand, the portable terminal, wherein map data of a specially designated area is stored in the map data storage device, calculates the distances from the corrected position information transmitted from the central apparatus to pre-assigned and registered points in the map data stored in the map data storage device, and outputs the results. Therefore, a holder of a portable terminal 1 can establish the relative position from his present point to each other point accurately on a personalized basis. Further, in this case, each portable terminal calculates distances to registered points independently, so that the workload at the central apparatus side can be eased.

Furthermore, in a ninth aspect of the system for providing position information, the map data storage device is a course information storage device for storing course information of golf courses in the aforementioned specially designated area, and the distance information output device calculates distance information from its position information to pre-assigned and registered points in the course information of a golf course stored in the course information storage device, and outputs the results.

In this case, the portable terminal, wherein course information of a golf course is stored in the course information storage device, calculates the distance from its own corrected position information transmitted from the central apparatus to pre-assigned and registered points in the course information of a golf course stored in the aforementioned course information storage device, and outputs the results. Therefore, a player who carries a portable terminal can establish his relative position from the point where he is playing to each other position accurately on a personalized basis.

A twelfth aspect of the system for providing position information comprises: a central apparatus that is capable of duplex communication with a portable terminal that is provided with a GPS receiver for measuring its position by receiving radio signals from satellites; and a fixed GPS receiver that is installed at known coordinates in a specially designated area where error factors from the ionosphere, or atmospheric layers, and errors from selective availability are distributed almost uniformly; and a difference data calculation device for calculating a difference between positioning data obtained by the fixed GPS receiver and the coordinates of this fixed GPS receiver as positioning error. The central apparatus is provided with a positioning error information transmitting device for transmitting the positioning error calculated by the difference data calculation device, and the portable terminal containing the GPS receiver is provided with a map data storage device for storing map data of a specially designated area, a position information correction device for, based on the positioning error transmitted from the central apparatus, correcting its position information in a specially designated area, which is obtained by the GPS receiver, and a distance information output device for calculating distances from the corrected position information to pre-assigned and registered points in course information stored by the course information storage device and for outputting the results.

In this case, the positioning error calculated by the difference data calculation device is transmitted from the central apparatus to the portable terminal. A position information correction device of the portable terminal or the GPS receiver, based on the positioning error transmitted from this central apparatus, corrects the position information, and also the distance information output device calculates the distances from this corrected position information to pre-assigned and registered points in the map data stored in the map data storage device, and outputs the results. Therefore, a holder of a portable terminal can establish the relative position from his present point to each other point accurately on a personalized basis. Furthermore, in this case, each portable terminal calculates distances to registered points independently, so that the workload at the central apparatus side can be eased, and also it is possible to obtain accurate and corrected position information at the portable terminal side in real time, without calling the central apparatus each time.

Furthermore, in a thirteenth aspect of the system for providing position information, the construction is such that the positioning error information transmitting device transmits a next positioning error only when a difference from the positioning error transmitted at the previous time exceeds a preset value.

In this manner, if the positioning error changes constantly within a preset range of values, it is not necessary to perform transmission of positioning error to each portable terminal, so that a considerable reduction in communication costs can be achieved.

Furthermore, in a fourteenth aspect of the system for providing position information, the map data storage device is a course information storage device for storing course information of golf courses in the aforementioned specially designated area, and the construction is such that the distance information output device calculates distance information from its position information to pre-assigned and registered points in the course information of golf courses stored in the course information storage device, and outputs the results.

In this case, the distance information output device calculates distances from corrected position information to pre-assigned and registered points in the course information of golf courses stored in the course information storage device, and outputs the results. Consequently, a player holding a portable terminal can establish the relative position from the point where he is playing to each other position accurately on a personalized basis.

Furthermore, in the fourth, ninth and fourteenth aspects of the system for providing position information, it is preferable that the central apparatus is provided with a score data access device that sums score data transmitted from each of the portable terminals, and enables each portable terminal to access the total.

In this manner, the score data access device sums score data transmitted from each portable terminal and displays the total so that each portable terminal can access it. Hence each player, while knowing his relative position to each point in the golf course accurately on a personalized basis, can obtain his own and other players' score data at his present point from the portable terminal.

Furthermore, in the fourth, ninth and fourteenth aspects of the system for providing position information, it is preferable that the central apparatus is provided with a service information distribution device for distributing a range of service information such as event information of associated golf courses to the portable terminal.

In this manner each player, while knowing their relative positions to each point in the golf course accurately on a personalized basis, can obtain various service information of each golf course from the portable terminal.
Fig. 1 is a block diagram of an overall structure of a golf information providing system showing a first embodiment of the present invention;
Fig. 2 is a block diagram showing a structure of a web data server installed in a central apparatus of the above;
Fig. 3 is a block diagram showing a structure of each section inside a clubhouse of the above;
Fig. 4 is a flow chart showing a procedure when a portable terminal of the above is used.

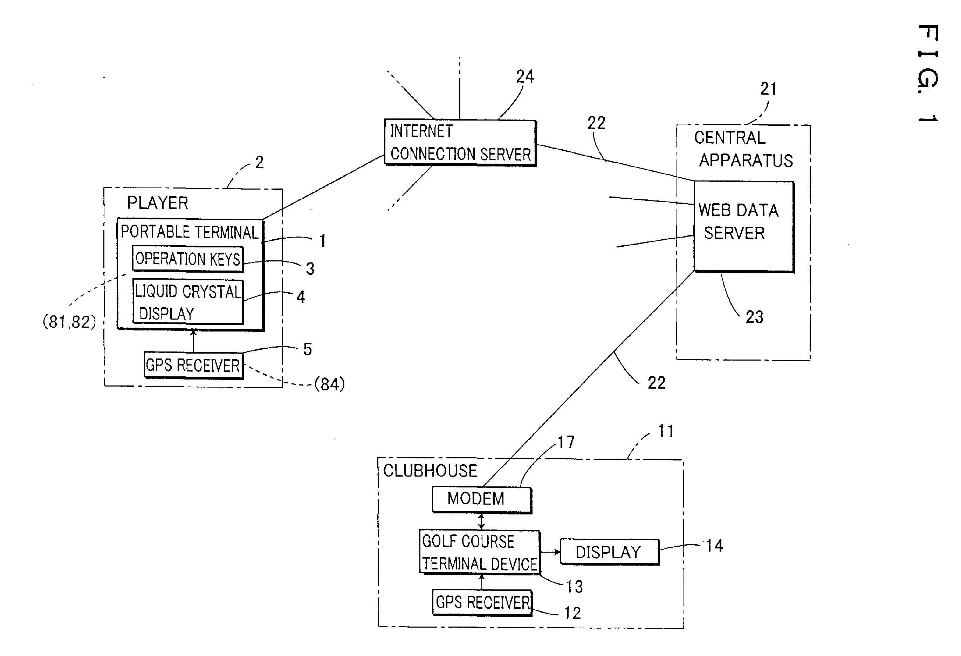

As follows is a description of an embodiment of a system for providing position information of the present invention, with reference to the appended drawings. Here, a position information providing system of the present invention is a golf information providing system utilized on a golf course. Fig. 1 is an overall block diagram showing an outline of the device. In the figure, numeral 1 is a portable terminal that a player 2 can carry, such as a portable telephone, which is provided with operating keys 3 as an input device, and a liquid crystal display 4 as an information display device for displaying a range of information. Furthermore, numeral 5 is a handheld GPS receiver that can be attached to the portable telephone 1. This GPS receiver 5 is provided with well known functionality as a position detecting device for measuring its own position in three dimensions (latitude, longitude and altitude) by receiving radio signals from a plurality of satellites, and for transmitting this positioning data externally, in other words in this case, to the portable terminal 1. Here, the portable terminal 1 and the GPS receiver 5 may be rented from a golf course where a player is playing, or a player may use his own if he has one.

Numeral 11 is a clubhouse serving as a golf course central apparatus appropriately arranged on a golf course. Here this comprises a GPS receiver 12 having the same functionality as the GPS receiver 5, a golf course terminal device 13 serving for the golf course as a terminal device for calculating positioning data from the GPS receiver 12 and constituted for example by a personal computer or the like, a display 14 for displaying a range of golf course information for a golf course, and a modem 17 built-in or external to the golf course terminal device 13. The GPS receiver 12 is here fixed at known coordinates whose latitude, longitude and altitude are measured accurately in advance, and the coordinates of this GPS receiver 12 are stored in the golf course terminal device 13 as true values.

On the other hand, numeral 21 is a central apparatus (complete central apparatus) for temporarily storing and controlling a range of information for golf courses scattered at different localities around the country, which is provided with a server, that is to say a web data server 23, capable of external access via a communication system 22, such as a telephone line for example. To be specific, the web data server 23 and the portable terminal 1 are interconnected via an Internet connection server 24 installed on a packet telecommunication network, which comprises the communication system 22, and the web data server 23 and the golf course terminal device 13 are connected directly by the communication system 22, without the Internet connection server 24. As a result, the portable terminal 1 and the golf course terminal device 13 transmit a range of information to an Internet website on the web data server 23, distributed on the WWW (World Wide Web), and also a range of necessary information can be obtained from the web data server 23.

Here, in the present embodiment, transmitting and receiving a range of information regarding golf courses are realized by utilizing a website on the Internet. However, the same function can be realized by methods other than the Internet.

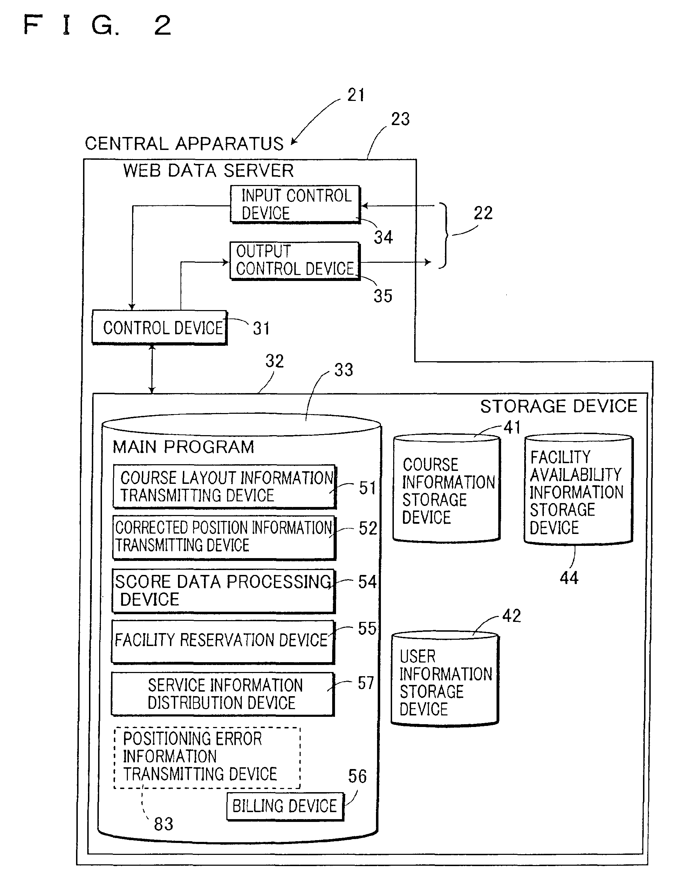

Next is a description of a detailed construction of the web data server 23 installed in the central apparatus 21, based on Fig. 2. In the figure, numeral 31 is a control device comprising a CPU or the like, which performs control of each section, data transmission, a range of calculations, temporary storage of data and the like, according to the control sequence of a main program stored in a storage device 32. Furthermore, numeral 34 is an input control device, which controls a range of data inputs from the portable terminal 1 or the golf course terminal device 13 connected via the communication system 22. Furthermore, numeral 35 is an output control device, which controls data outputs to the portable terminal 1 or the golf course terminal device 13.

In addition to the main program 33, the storage device 32 stores a range of information regarding each golf course. To explain this in detail, numeral 41 is a course information storage device for storing course information of golf courses at different localities around the country. This course information storage device 41 stores the whole course layout plan and map data such as a more detailed, schematic diagram of each hole and the like for each of the golf courses that have previously registered to use this system. In particular, in the course layout plan and schematic diagram of each hole, pre-assigned and registered points (for example pins, bunkers, ponds and the like), and three dimensional coordinate information of each hole are stored in the course information storage device 41 along with the golf course name and hole names. Furthermore, numeral 42 is a user information storage device for storing information about users of the portable terminal 1, which here stores for example, the user's name, their scores in actual games on the golf course and the like for each user. Additionally, the storage device 32 is provided with a facility availability information storage device 44 for storing information about the availability of a range of facilities such as meals in the golf courses.

On the other hand, for its functional construction the main program 33 is provided with a course layout information transmitting device 51, a corrected position information transmitting device 52, a score data processing device 54, a facility reservation device 55 and a billing device 56. The course layout information transmitting device 51 reads out map data of a specified golf course to transmit to the portable terminal 1. The map data from this course layout information transmitting device 51 can be displayed by the liquid crystal display 4 on the portable terminal 1. The present embodiment has a function wherein, when there is a selection command from the portable terminal 1, the course layout information transmitting device 51 reads out map data of the selected and specified golf course from the course information storage device 41 and transmits the data to the portable terminal 1. In this manner, before a player plays golf on each hole of a golf course, by saving map data to a storage device (not shown in the figure) of the portable terminal, this map data can be displayed on the liquid crystal display 4 appropriately, so that it is possible to establish the status and so forth of each course in advance.

Furthermore, when positioning data obtained by the GPS receiver 5 is transmitted from the portable terminal, the corrected position information transmitting device 52 serving as a distance information distribution device determines at which hole on which golf course the GPS receiver 5, or rather the player 2 who carries the portable terminal 1, is located based on three dimensional coordinate information for each hole of the golf course stored in the course information storage device 41. It also accesses the golf course terminal device 13 of the applicable golf course to obtain difference data as positioning error, being the difference between positioning data obtained from the GPS receiver 12 and true values stored in advance from the golf course termination device 13, and corrects the positioning data transmitted from the portable terminal 1 based on this difference data. Then, it transmits this corrected and accurate position data to the portable terminal 1, and also calculates the distances to pre-assigned and registered points within the hole such as for example, a pin, a bunker, or a pond, using this accurate position data as a reference, and then distributes the distance information obtained to the portable terminal 1.

The score data processing device 54 saves the score for every hole, which is input from the portable terminal 1 and transmitted via the communication system 22, to the user information storage device 42, and also sums the score when necessary, to maintain it as individual score data. This score data processing device 54 is also provided with a function as a score data access device for summing score data for each hole that is transmitted from each portable terminal 1 via the communication system 22 in real time, and for making listings of these summed score results for each player 2 accessible to each portable terminal 1. Furthermore, the facility reservation device 55 reads out availability information of the facilities in an assigned golf course by request from the portable terminal 1, receives a reservation if there is any vacancy in the facility, and notifies the order to the portable terminal 1. As a result, it is possible to make for example, an advance reservation for lunch, during play, from the portable terminal 1.

Moreover, the billing device 56 charges a user separately from the packet communication charge of the communication system 22 when the present apparatus is used, and specifically counts the number of accesses by the user from the portable terminal 1 to the web data server 23, notifying the toll to the portable terminal 1 or the golf course termination device 13 depending on the counted number. Here, charging is done such that, for example one count is approximately one yen, and the burden on the user is reduced as much as possible.

Furthermore numeral 57 is a service information distribution device for distributing event announcements of associated golf courses in each locality, and other varied service information to each portable terminal 1. As a result, the portable terminal 1 can obtain a range of service information for each golf course.

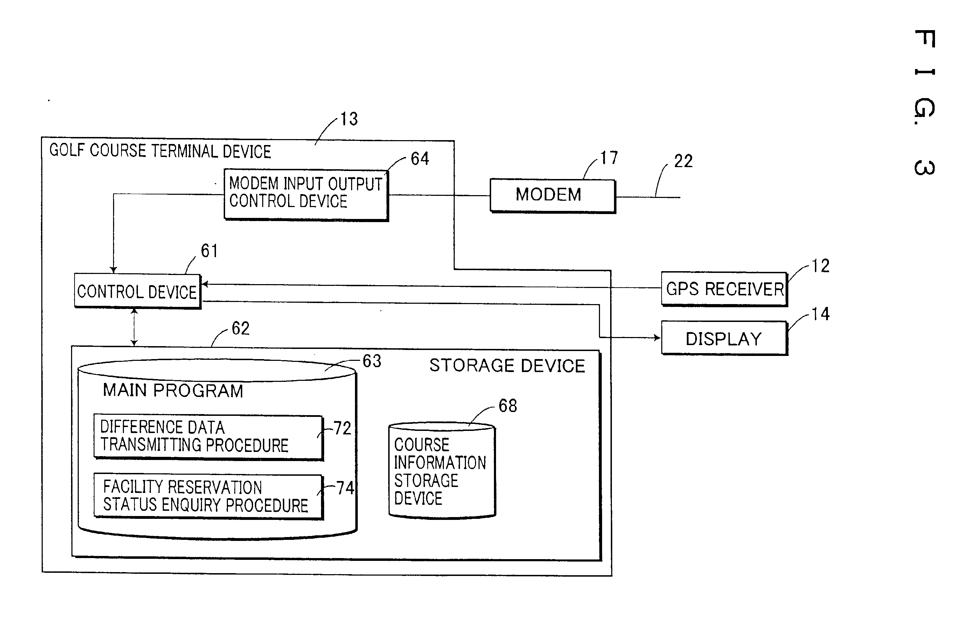

Fig. 3 is a block diagram showing a detailed construction of each part in a clubhouse 11. In the figure, numeral 61 is a control device comprising a CPU, which performs control of each section, data transmission, a range of calculations, temporary storage of data and the like, according to the control sequence of a main program 63 stored in a storage device 62. Furthermore, numeral 64 is a modem input output control device, which controls a range of data inputs and outputs from the web data server 23 connected via a modem 17. The storage device 62 is provided with a course information storage device 68 for storing course information for the golf course, in addition to the main program 63. The specific content of the information stored in the course information storage device 68 is identical to that stored in the course information storage device 41 of the web data server 23.

The functionality of the main program 63 comprises a difference data transmitting procedure 72 and a facility reservation status enquiry procedure 74. The difference data transmitting procedure 72 calculates difference data between positioning data obtained from a fixed GPS receiver 12 and the true coordinates of the GPS receiver 12 stored in advance, and transmits this difference data to the web data server 23 via the modem 17 and the communication system 22. As a result, the web data server 23 can collectively control the difference data transmitted from each golf course.

The facility reservation status enquiry procedure 74 reads the reservation status of each of the facilities in a golf course, which are controlled by the golf course terminal device 13, from a facility vacancy information storage device 44 in the web data server 23. The arrangement is such that the reservation status of each facility at the present time is displayed on a display 14.

Here in the present embodiment, the GPS receiver 12 serving as a fixed station is installed inside a clubhouse 11. However, it may be installed at another place outside the clubhouse 11, under the condition that the GPS receiver 12 should be installed in a golf course in a specially designated area where error factors from the ionosphere, or atmospheric layers, and errors from selective availability (intentional accuracy degradation by satellite operators) are distributed almost uniformly, when receiving time signals from satellites. This specially designated area also includes an area where a player 2 uses the present apparatus. If the player 2 and the GPS receiver 12 are inside a specially designated area, the abovementioned error factors from the ionosphere, or atmospheric layers, and errors from selective availability are mitigated by error correction of positioning data obtained from the GPS receiver 5 held by the player 2. Furthermore, correction of positioning data obtained from this GPS receiver 5 is preferably performed based on difference data obtained in the same specially designated area and almost at the same time. In this manner, combined with the so-called differential GPS method in a specially designated area, it is possible to perform complete positioning control in units of yards on a golf course and to realize this without a caddy.

Furthermore, in recent years, since selective availability has been discontinued, the range of the abovementioned specially designated area is extended. Therefore, the GPS receiver 12 serving as a fixed station may be installed not on a golf course but in a major location (for example, in approximately 10 places around the country). As a result, compared with installing a GPS receiver 12 on every golf course, the number of fixed stations can be reduced considerably, thus enabling reduction of communication costs associated with the distribution of difference data.

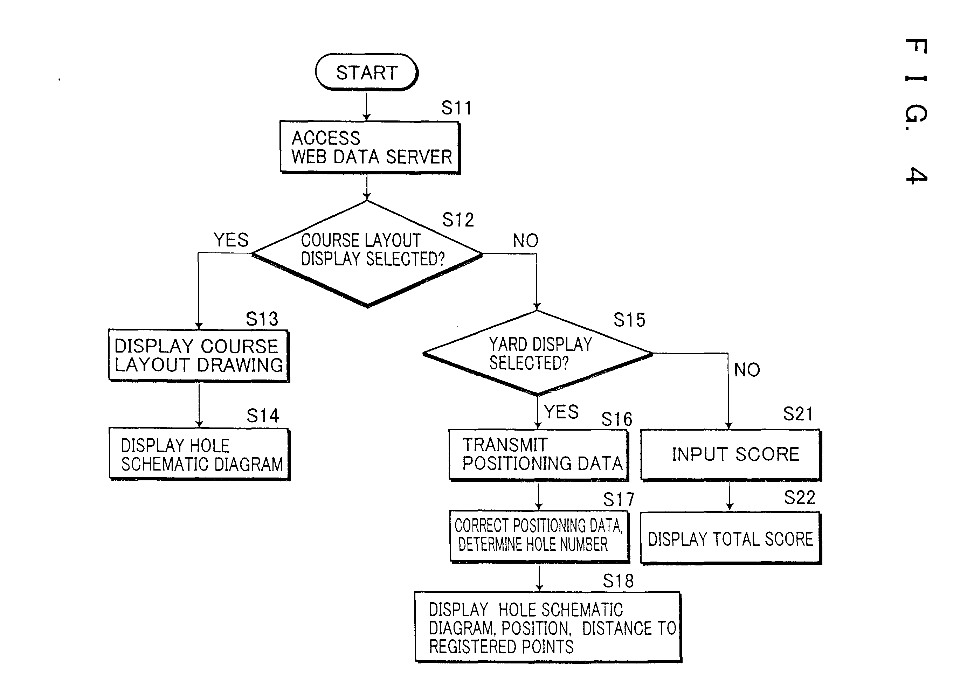

Next is a description of the operation of the abovementioned construction using a flow chart shown in Fig. 4. Fig. 4 is a flow chart showing the procedures during a game in which the portable terminal 1 is used. In the figures, the GPS receiver 5 is attached to the portable terminal 1 carried by the player 2 throughout the game, so that positioning data showing the position of the player 2 can be obtained from the GPS receiver 5. Here, in step S 11, when using the operation keys 3 of the portable terminal 1, access is made to the web data server 23 in the central apparatus 21 via the Internet connection server 24 and the communication system 22, and the liquid crystal display 4 displays website information from the Internet associated with the web data server 23. Then, in step S12 when a display of course layout is requested, by selecting a display section of the corresponding service content through the operation keys 3, the instruction is transmitted to the web data server 23 and a list of registered golf courses stored in the course information storage device 41 is displayed on the liquid crystal display 4. If a specific golf course name is selected from the list, the web data server 23 reads out map data showing the course layout plan of the selected golf course from the course information storage device 41, and transmits the data from the output control device 35 to the portable terminal 1 via the communication system 22. As a result, the liquid crystal display 4 displays a course layout plan showing the whole of the selected golf course. Furthermore, if a hole number is input through the operation keys 3 of the portable terminal 1 in this situation, the web data server 23 transmits map data showing a schematic diagram of the specified hole number of the same golf course to the portable terminal 1. As a result, at the portable terminal 1 side, a schematic diagram of the specified hole number of the golf course is displayed on the liquid crystal display 4. On the course layout plan and the schematic diagram, out-of-bounds (play prohibited area) lines, hazards (ponds, bunkers, etc.) are displayed in addition to the tee, fairway, green, pin, etc. (step S13).

On the other hand in step S15, if course layout display is not selected in the aforementioned step S12, but instead yard display is selected, the portable terminal 1 transmits positioning data obtained from the GPS receiver 5 to the web data server 23 in the central apparatus 21 (step S16). The corrected position information transmitting device 52 of the web data server 23 determines on which golf course the GPS receiver 5, or rather the player 2 who carries the portable terminal 1, is located based on positioning data obtained from the GPS receiver 5. Then, it accesses the golf course terminal device 13 of the specified golf course and obtains difference data, being the difference between the positioning data obtained from the GPS receiver 12 at almost the same time as that received by GPS receiver 5 and true values stored in advance, and based on the difference data corrects the positioning data transmitted from the portable terminal 1. Then, from this corrected and accurate position data, it determines on which hole on the specified golf course the player 2 is located (step S17). Here, if it is difficult to determine the hole from the corrected position data, a request is sent from the central apparatus 21 through the liquid crystal display 4 to prompt for input of the hole number.

Then, the web data server 23 reads out map data showing a schematic diagram of this specified hole number from the course layout information transmitting device 51. At the same time, the corrected position information transmitting device 52 of the web data server 23 embeds the aforementioned corrected and accurate position data, together with calculated distance information such as the distances to pre-assigned and registered points within the hole, such as for example pins, bunkers or ponds, using this corrected and accurate position data as a reference, into the aforementioned map data read out from the course layout information transmitting device 51, and transmits this to the portable terminal 1 (step S18). As a result, the liquid crystal display 4 of the portable terminal 1 carried by the player 2 displays the schematic diagram of the hole that is being played, and also the distances to pins, bunkers and ponds. That is to say, on whichever golf course one is located, and wherever the GPS receiver 5 of the portable terminal 1 is, by a simple operation of calling the web data server 23 it is possible to establish promptly where one is located, what kind of hazards (bunkers, ponds, etc.) are in the vicinity, and how far it is to pins, bunkers or ponds on the same hole.

On the other hand, in the aforementioned steps S12 and 15, when score input is selected without selecting course layout display or yard display, control proceeds to step S21. Here, if an instruction to select score input is transmitted to the web data server 23 of the central apparatus 21, a display prompting for score input for each hole is shown on the liquid crystal display 4 of the portable terminal 1. Then, if a hole where play has been finished is selected and a score is input, the score data processing device 54 stores the user's score for each hole in the user information storage device 42. The score of each hole stored can be summed during the game or after the game on request from the portable terminal 1 for display, and also scores recorded in the past on the same or any other golf course can be accessed on a website on the Internet through the portable terminal 1 or a personal computer at home (step S22). Here, the arrangement may also be such that the portable terminal 1 is provided with a device for prompting for display and input of score data and a device for storing the scores. Summing the scores is then performed at the portable terminal 1 side and when the game is completed, all of the score results are transmitted to the web data server 23 collectively. By so doing, the web data server 23 does not need to be called each time a score is input, so that communication costs can be reduced. Furthermore, the score data processing device 54 of the central apparatus 21 displays score data transmitted from each portable terminal 1 via the communication system 22 in real time for each player 2, and publishes it on the web data server 23. As a result, each portable terminal 1 can obtain the current score data of itself and other players 2 in real time by displaying them on the liquid crystal display 4.

Furthermore, by accessing a facility reservation device 55 of the web data server 23, it is also possible to make a reservation for lunch in the golf course for a future visit, which is not shown in this flow chart of Fig. 4. When there is a reservation enquiry for a range of facilities from the portable terminal 1 or a personal computer the facility reservation information device 55 reads availability information regarding the applicable facility from the facility availability information storage device 44, and accepts the reservation if there is a vacancy. Moreover, the golf course terminal device 13 of each golf course obtains availability information regarding its facilities stored in the facility availability information storage device 44 of the web data server 23 as required, and hence it is possible to display the reservation status of each facility at the present time on the display 14.

Furthermore, at the time of access from a portable terminal 1, appropriate display services such as advertisements may be shown from the web data server 23 by the service information distribution device 57. In this manner, each player 2 can obtain direct or secondary information.

Moreover, in the abovementioned procedure, the positioning data of the GPS receiver 5 transmitted from the portable terminal 1 is corrected at the central apparatus 21 side. However, the arrangement may be such that difference data is transmitted from the central apparatus 21 to the portable terminal 1 at fixed intervals, its accurate position at each time calculated by a program held on the portable terminal 1, and a similar display made on the liquid crystal display 4. In this case it is necessary to transmit difference data from the central apparatus 21 to the portable terminal 1 at fixed intervals. However, the effort taken to call the web data server 23 each time can be avoided.

Here, the construction of the web data server 23 may also be such that difference data is transmitted to the web data server 23 of the central apparatus 21 at the same time, and when positioning data of the GPS receiver 5 is transmitted from the portable terminal 1 to the web data server 23, this positioning data is corrected from the difference data transmitted immediately before. As a result, the effort of the golf course terminal device 13 of each golf course in acquiring difference data each time that positioning data is transmitted from the portable terminal 1 is avoided, and especially when there is a large number of portable terminals 1, reduction of communication cost can be achieved.

Incidentally in recent years, since selective availability has been discontinued, the accuracy error of GPS receivers has improved to approximately 10 meters. However, in practice, the present situation is that there is several tens of meters of error due to weather conditions and the like. In a case where position management is performed in yard units, it is necessary to correct positioning data errors of the GPS receiver 5 as set out above.

The abovementioned embodiment has a central apparatus 21 capable of duplex communication with a portable terminal 1 having a position detecting device (GPS receiver 5) for positioning, which measures its position. This central apparatus is provided with a map data control device (course information storage device 41) for storing and controlling map data of each locality, a corrected position information transmitting device 52 serving as a distance information distribution device that, when the portable terminal 1 transmits its position information obtained by the position detecting device, calculates distance information from the position information to pre-assigned and registered points in map data of each locality stored in the map data control device, and sends the results to the portable terminal 1 that transmitted the position information.

In this manner, when the positioning data obtained by the position detecting device is transmitted from the portable terminal 1 to the corrected position information transmitting device 52 of the central apparatus 21, the corrected position information device 52 reads map data stored in advance and controlled by the map data control device, and distributes the distances, from its own positioning data to assigned points, to the portable terminal 1 that transmitted the positioning data. Consequently, a holder of the portable terminal 1 can determine his relative position from his present point to each point in the map data as stored and controlled by the map data control device of the central apparatus 21, accurately and on a personalized basis.

In this case, as in the abovementioned embodiment, if the position detecting device is a GPS receiver 5 for measuring its position by receiving radio waves from satellites, it is possible for a user of this GPS receiver 5 to obtain positioning data.

Incidentally, in case the error of the positioning data from the GPS receiver 5 is small, this positioning data can be used as accurate positioning data of the player 2 as it stands. However, the accuracy of an actual GPS receiver 5 is inadequate for a precise distance information, for example in yards (approximately 91.4 cm), as required on a golf course, there is provided in the present embodiment a fixed GPS receiver 12 that is installed at known coordinates. This fixed GPS receiver 12 is installed inside a specially designated area where error factors from the ionosphere, or atmospheric layers, and errors from selective availability are distributed almost uniformly. Furthermore, there is provided a difference data transmitting procedure 72 serving as a difference data calculation device for calculating the difference between the positioning data obtained from the fixed GPS receiver 12 and the coordinates of this fixed GPS receiver 12 as positioning error, and a corrected position information transmitting device 52 serving as a position information correction device for correcting position information transmitted from a portable terminal 1 inside the specially designated area.

By so doing, since there is a portable terminal 1 having a GPS receiver 5 and a fixed GPS receiver 12 installed at known coordinates in a specially designated area, error factors from the ionosphere, or atmospheric layers, and errors from selective availability are removed from positioning data obtained from a GPS receiver 5 held by a user. As a result, when distributing distance information, it is possible to provide more accurate information on a personalized basis.

Furthermore, the position information control device of the present embodiment is provided as a course information storage device 41, being a course information control device for storing and controlling course information of golf courses at each locality. The construction is such that a corrected position information transmitting device 52, being the aforementioned distance information distribution device, calculates distance information from its position information to assigned and registered points in course information of a golf course stored in the course information storage device 41, and transmits the result.

By so doing, when positioning data obtained by a position detecting device is transmitted from a portable terminal 1 to the corrected position information transmitting device 52 of the central apparatus 21, the corrected information transmitting device 52 reads course information of the golf course, which is stored in advance and controlled by the course information storage device 41, and distributes the distances from its own positioning data to registered points in the course information of the golf course, for example pins, ponds, bunkers, etc., to the portable terminal 1 that transmitted the positioning data. Consequently, a player 2 holding a portable terminal 1 can establish his relative position from the point where the player 2 is playing to each point on the golf course accurately on a personalized basis.

In this case also, in addition to a movable GPS receiver 5 that is installed in the portable terminal 1, there is provided a fixed GPS receiver 12 that is installed at known coordinates, and can receive radio waves from satellites, and this fixed GPS receiver 12 is installed inside a specially designated area where error factors from the ionosphere, or atmospheric layers, and errors from selective availability are distributed almost uniformly. Furthermore, there is provided a difference data transmitting procedure 72 serving as a difference data calculation device for calculating the difference between positioning data obtained from the fixed GPS receiver 12 and the coordinates of this fixed GPS receiver 12 as positioning error, and a corrected position information transmitting device 52 serving as a position information correction device for correcting position information transmitted from the portable terminal 1 in the specifically designated area. As a result, errors from selective availability can be removed from positioning data obtained from a GPS receiver 5 held by a user, and hence, when distributing distance information, it is possible to provide more accurate information on a personalized basis.

Moreover the present embodiment comprises: a GPS receiver 5 that is installed in this portable terminal 1 and measures its position by receiving radio signals from satellites; a central apparatus 21 for storing and controlling course information of golf courses at each location; and a communication system 22 for connecting between the portable terminal 1 and the central apparatus 21. The central apparatus 21 is provided with a corrected position information transmitting device 52 serving as a distance information distribution device for, when position information (positioning data) obtained by the GPS receiver 5 is transmitted from the portable terminal 1 via the communication system 22, calculating distances from its positioning data to pre-assigned and registered points in the course information, and for distributing the results to the portable terminal 1 that transmitted the position information.

In this case, when the portable terminal 1 transmits its own positioning data obtained from the GPS receiver 5 to the central apparatus 21 via the communication system 22, the corrected position information transmitting device 52 reads the course information pertaining to the golf course and the hole where a player 2 holding the portable terminal 1 is playing, from the golf course information stored in advance and controlled for each locality. Then, in relation to this specified course information, distances from its own positioning data to pre-assigned and registered points, for example pins, ponds, bunkers, etc. is distributed to the portable terminal 1 that transmitted the positioning data. Consequently, a player 2 holding a portable terminal 1 can establish his relative position from the point where the player 2 is playing to each point on a golf course accurately on a personalized basis, for each of the golf courses whose course information is stored and controlled in the central apparatus 21.

Furthermore, in addition to a movable GPS receiver 5 that is installed in the portable terminal 1, there is provided a fixed GPS receiver 12 that is installed at known coordinates and can receive radio waves from satellites, and this fixed GPS receiver 12 is installed inside a specially designated area where error factors from the ionosphere, or atmospheric layers, and errors from selective availability are distributed almost uniformly. Moreover, there is provided a corrected position information transmitting device 52 serving as a position information correction device for calculating the difference between positioning data obtained from the fixed GPS receiver 12 and the coordinates of the fixed GPS receiver 12 as positioning error, for correcting position information transmitted from the portable terminal 1 based on this positioning error.

As a result, there is a GPS receiver 5 held by a player 2 and a fixed GPS receiver 12 installed at known coordinates in a golf course within a specially designated area, so that error factors from the ionosphere, or atmospheric layers, and errors from selective availability are mitigated by error correction of positioning data obtained from the GPS receiver 5 held by the player 2. Consequently, when distributing distance information, it is possible to provide information in yards.

Additionally, in the present embodiment, when a required golf course name is selected on a portable terminal 1, map data containing a course layout plan of the selected golf course is transmitted to the portable terminal 1 from map data stored for each golf course in the course information storage device 41 of the central apparatus 21. Furthermore, when hole numbers are assigned along with golf course names, map data containing a schematic diagram pertaining to the hole number of the selected golf course is transmitted to the portable terminal 1 from map data stored for each golf course in the course information storage device 41. In this manner, a player holding a portable terminal 1 can obtain a course layout plan and a schematic diagram of each hole of each golf course on a personalized basis.

Next is a description of another modification of the present embodiment. Firstly, as a first modification, the arrangement may be such that a corrected position information transmitting device 52 transmits corrected and accurate position data of a GPS receiver 5 to a portable terminal 1, and at the portable terminal 1 side, distances to pre-assigned and registered points within the hole, for example pins, bunkers, ponds, etc., are calculated using this corrected position data as a reference, the result being displayed with the course schematic diagram, for example on a liquid crystal display 4 of the portable terminal 1.

To be specific, when positioning data obtained from the GPS receiver 5 is transmitted from the portable terminal 1 to the web data server 23 of the central apparatus 21 by the aforementioned procedure of step S16 in Fig. 4, in the succeeding step S17, the corrected position information transmitting device 52 of the web data server 23 corrects the positioning data obtained from the GPS receiver 5, and also determines at which hole in which golf course the player 2 is located from the corrected position data. Then, in the next step S18, the corrected position information transmitting device 52 of the web data server 23 transmits the corrected and accurate position data, and course information containing map data showing coordinate information of each registered point regarding the specified hole and a schematic diagram of the hole to the portable terminal 1, without transmitting distance information of the calculated distances to the registered points. Here, depending on the storage capacity of the portable terminal 1, the course information may be transmitted collectively for a plurality of holes. Furthermore, this course information does not need to be transmitted with corrected and accurate position data every time. For example, it may be transmitted from the web data server 23 only when, from the corrected and accurate position data, it is judged that the positioning data is being transmitted for the first time since the player 2 holding the portable terminal 1 moved to the hole.

Then, the portable terminal 1 stores the course information transmitted from the web data server 23 in a course information storage device 81 (refer to Fig. 1), and also calculates the distances from the corrected and accurate position data, similarly transmitted from the web data server 23, to pre-assigned and registered points in the layout information stored in the course information storage device 81, by a distance information output device 82 (refer to Fig. 1), the results being displayed on, that is output to, the liquid crystal display 4. Each portable terminal 1 calculates the distances to registered points independently, so that the workload at the central apparatus 21 side can be eased.

As described above, this modification comprises: a central apparatus 21 that is capable of duplex communication with a portable terminal 1 that is provided with a GPS receiver 5 for measuring its position by receiving radio signals from satellites; a fixed GPS receiver 12 that is installed at known coordinates in a specially designated area where error factors from the ionosphere, or atmospheric layers, and errors by selective availability are distributed almost uniformly; and a difference data calculation device 72 for calculating the difference between positioning data obtained by the fixed GPS receiver 12 and the coordinates of the fixed GPS receiver 12 as positioning error. The central apparatus 21 is provided with a corrected position information transmitting device 52 for correcting position information transmitted from the portable terminal 1 in the specially designated area, based on the positioning error calculated by the difference data calculation device, and for transmitting this corrected position information to the portable terminal 1. Also the portable terminal 1 is provided with a map data storage device (a course information storage device 81) for storing map data of the specially designated area, and a distance information output device 82 for calculating the distance from the corrected position information to assigned and registered points in map data stored in the map data storage device, and for outputting the result.

In this case, when position information obtained by the GPS receiver 5 is transmitted from the portable terminal 1 to the central apparatus 21 via the communication system 22, the corrected position information transmitting device 52 in the central apparatus 21, based on the positioning error calculated by the difference data calculation device 72, corrects position information transmitted from the portable terminal 1 and transmits this corrected position information to the portable terminal 1. On the other hand, the portable terminal 1, in which map data of the specially designated area is stored in the map data storage device, calculates the distances from the corrected position information transmitted from the central apparatus 21 to assigned and registered points in the map data stored in the map data storage device, and outputs the results. Therefore, a holder of a portable terminal 1 can establish his relative position from his present point to each other point accurately on a personalized basis. Further, in this case, each portable terminal 1 calculates the distances to registered points independently, so that the workload at the central apparatus 21 side can be eased.

Furthermore, the map data storage device of the present modification is a course information storage device 81 for storing course information of golf courses in a specially designated area, and the construction is such that the distance information output device 82 calculates distance information from its position information to pre-assigned and registered points in course information of golf courses stored in the course information storage device, and outputs the result. That is to say, it comprises: a portable terminal 1; a GPS receiver 5 for measuring its own position by receiving radio signals from satellites; a central apparatus 21; a fixed GPS receiver 12 that is installed at known coordinates in a golf course and can receive radio signals from satellites; a difference data transmitting procedure 72 serving as a difference data calculation device for calculating differences between positioning data obtained from the fixed GPS receiver 12 and the coordinates of the fixed GPS receiver 12 as positioning error; and a communication system 22 for connecting the portable terminal 1 and the central apparatus 21. The central apparatus 21 is provided with a corrected position information transmitting device 52 for correcting position information transmitted from the portable terminal 1, based on the positioning error calculated by the difference data transmitting procedure 72, and transmitting this corrected position information to the portable terminal 1. Furthermore, the portable terminal 1 is provided with a course information storage device 81 for storing course information of the aforementioned golf course, and a distance information output device 82 for calculating distances from the corrected position information to pre-assigned and registered points in the course information stored in the course information storage device 81, and outputting the results.

In this case, when position information obtained by the GPS receiver 5 is transmitted from the portable terminal 1 to the central apparatus 21 via the communication system 22, the corrected position information transmitting device 52 in the central apparatus 21, based on the positioning error calculated by the difference data calculation device 72, corrects the position information transmitted from the portable terminal 1 and transmits this corrected position information to the portable terminal 1. On the other hand, the portable terminal 1, in which golf course information is stored in the course information storage device 81, calculates distances from the corrected position information, as transmitted from the central apparatus 21, to pre-assigned and registered points in the course information stored in the course information storage device 81, and outputs the results. Therefore, a player 2 holding a portable terminal 1 can establish his relative position from the point at which the player 2 is playing to each other point inside the golf course accurately on a personalized basis. Further, in this case, each portable terminal 1 calculates distances to registered points independently, so that the workload at the central apparatus 21 side can be eased.

Next is a description of a second modification. Instead of the corrected position information transmitting device 52 shown in Fig. 2, this second modification is provided with a positioning error information transmitting device 83 for distributing difference data, that is positioning error, obtained from a golf course terminal device 13, at fixed intervals to each portable terminal 1. Furthermore, the portable terminal 1 is provided with a course information storage device 81 and a distance information output device 82 as in the first modification. Moreover, the portable terminal 1 and the GPS receiver 5 are provided with a position information correction device 84 for correcting the position information obtained from the GPS receiver 5 based on the positioning error transmitted from the central apparatus 21.

Then, in the aforementioned procedure in step S16 of Fig. 4, when the portable terminal 1 calls the web data server 23 for the first time, it transmits positioning data obtained from the GPS receiver 5. As a result, the web data server 23 establishes the golf course from the transmitted positioning data and transmits course information pertaining to the golf course to the portable terminal 1. If required, the transmitted positioning data may be corrected to establish a more accurate position. Conversely, if golf course information of each locality can be stored in the portable terminal 1, which depends on the storage capacity of the portable terminal 1, it is not necessary to transmit positioning data to the web data server 23. However, when the present apparatus is used on a golf course, it is necessary to transmit an initial signal to prompt for difference data to be transmitted from the web data server 23.

Since the telephone number of the portable terminal 1 is transmitted to the web data server 23 together with positioning data from the portable terminal 1, the positioning error information transmitting device 83 transmits difference data of the golf course where a player 2 holding the portable terminal 1 is playing at fixed intervals (for example every three minutes) to the portable terminal 1 whose telephone number was transmitted. On receiving this at the portable terminal 1 side, based on the last difference data transmitted from the central apparatus 21, the position information correction device 84 incorporated in the GPS receiver 5 corrects the positioning data obtained from the GPS receiver 5. Then, based on corrected and accurate position data, the liquid crystal display 4 displays a schematic diagram of the holes on the golf course where the GPS receiver 5 is located, and also displays the corrected and accurate position. Furthermore, the distance information output device 82 calculates the distances to pre-assigned and registered points in the course information stored in the course information storage device 81, and those results are also displayed.

An advantage of this second modification is that, based on the difference data transmitted from the central apparatus 21, it is possible to establish an accurate position almost in real time, without the portable terminal 1 calling the central apparatus 21 each time. As a result, communication costs can be reduced considerably. Here in this case, it is preferable not to charge the player 2 depending on the number of times the communication system 22 is used, but rather by a fixed amount system for collecting a fixed amount every fixed period.

Furthermore, at the portable terminal 1 side it is possible to obtain an accurate position almost in real time, so that if a player 2 holding the portable terminal 1 is judged to enter a green, for example, it also is possible to show a display to prompt for input of scores on the liquid crystal display 4, being a display device.

Moreover in recent years, following the discontinuation of selective availability, the accuracy error of GPS receivers has improved to within a range of approximately 10 meters, so that difference data does not need to be transmitted as frequently as in the past. For example, this may exceed one minute.

Furthermore, in order to reduce communication costs, the construction of the positioning error information transmitting device 83 is preferably such that the next positioning error is only transmitted in the case where the difference value from the positioning error transmitted at the previous occasion exceeds a predetermined value. For example, in a case where the positioning error, being difference data, is 10 meters, if the positioning error from information transmitted to the portable terminal 1 changes by 1 meter, being a predetermined value, or more (9 meters or less, or 11 meters or more) from the reference of 10 meters that had been transmitted at the previous time, the positioning error is then transmitted to the portable terminal 1. As a result, while the positioning error changes stably within predetermined values, it is not necessary to transmit difference data to each portable terminal 1, so that a considerable reduction of communication costs can be achieved.

As described above, the present modification comprises: a central apparatus 21 that is capable of duplex communication with a portable terminal 1 that is provided with a GPS receiver 5 for measuring position by receiving radio signals from satellites, a fixed GPS receiver 12 that is installed at known coordinates in a specially designated area where error factors from the ionosphere, or atmospheric layers, and errors from selective availability are distributed almost uniformly; and a difference data transmitting device 72 serving as a difference data calculation device for calculating the difference between positioning data obtained by the fixed GPS receiver 12 and the coordinates of this fixed GPS receiver 12 as positioning error. The central apparatus 21 is provided with a positioning error information transmitting device 83 for transmitting the positioning error calculated by the difference data calculation device 72, and also the portable terminal 1 containing the GPS receiver 5 is provided with a map data storage device (course information storage device 81) for storing map data of the specially designated area, a position information correction device 84 for, based on the positioning error transmitted from the central apparatus 21, correcting the position information in the specially designated area, which is obtained by the GPS receiver 5, and a distance information output device 82 for calculating the distances from the corrected position information to pre-assigned and registered points in course information stored by the course information storage device, and for outputting the results.

In this case, the positioning error calculated by the difference data transmitting device 72 is transmitted from the central apparatus 21 to the portable terminal 1. Then, the position information correction device 84 of the portable terminal 1 or the GPS receiver 5, based on the positioning error transmitted from this central apparatus 21, corrects the position information, and also the distance information output device 82 calculates the distance from this corrected position information transmitted from the central apparatus 21 to pre-assigned and registered points in the map data stored in the map data storage device, and outputs the results. Therefore, a holder of the portable terminal 1 can establish his relative position from his present point to each other point accurately on a personalized basis. Furthermore in this case, each portable terminal 1 calculates the distances to registered points independently, so that the workload at the central apparatus 21 side can be eased, and also it is possible to obtain corrected and accurate position information, at the portable terminal 1 side in real time without calling the central apparatus 21 each time.

Furthermore, the map data storage device of the present modification is a course information storage device 81 for storing course information of golf courses in a specially designated area, and the construction is such that the distance information output device 82 calculates distance information from its own position information to pre-assigned and registered points in the course information of golf courses stored in the course information storage device, and outputs the results. That is to say, it comprises: a portable terminal 1, a GPS receiver 5 for measuring its own position by receiving radio signals from satellites, a central apparatus 21, a fixed GPS receiver 12 that is installed at known coordinates in a golf course and can receive radio signals from satellites, a difference data transmitting procedure 72 serving as a difference data calculation device for calculating differences between positioning data obtained from the fixed GPS receiver 12 and the coordinates of the fixed GPS receiver 12 as positioning error, and a communication system 22 for connecting the portable terminal 1 and the central apparatus 21. The central apparatus 21 is provided with a positioning error information transmitting device 83 for transmitting the positioning error calculated by the difference data transmitting device 72 to the portable terminal 1. Furthermore, the portable terminal 1 is provided with a course information storage device 81 for storing course information of the aforementioned golf course, a position information correction device 84 for, based on the positioning error transmitted from the central apparatus 21, correcting position information obtained by the GPS receiver 5, and a distance information output device 82 for calculating distances from this corrected position information to pre-assigned and registered points in the course information stored in the course information storage device 81, and outputting the results.

In this case, the positioning error calculated by the difference data transmitting device 72 is transmitted from the central apparatus 21 to the portable terminal 1. Then, the position information correction device 84 of the portable terminal 1 or the GPS receiver 5, based on the positioning error transmitted from this central apparatus 21, corrects the position information, and also the distance information output device 82 calculates the distance from this corrected position information to pre-assigned and registered points in the course information stored in the course information storage device 81, and outputs the results. Therefore, a player 2 holding a portable terminal 1 can establish his relative position from the point where the player 2 is playing to each point on the golf course accurately on a personalized basis. Furthermore in this case, each portable terminal 1 calculates the distances to registered points independently, so that the workload at the central apparatus 21 side can be eased, and also it is possible to obtain corrected and accurate position information at the portable terminal 1 side in real time without calling the central apparatus 21 each time.

The embodiment and the modifications are provided in common with a score data processing device 54 serving as a score data access device for summing score data transmitted from each portable terminal 1 and making it possible for this summed result to be accessed by each portable terminal 1. As a result, the score data processing device 54 sums score data transmitted from each portable terminal 1 via the communication system 22 in real time, and displays the sum result for each portable terminal 1 to access. Consequently, each player can obtain the score data at the present time for himself and other players 2, while establishing their relative positions to each point in a golf course accurately on a personalized basis.

Furthermore, the central apparatus 21 is provided with a service information distribution device 57 for distributing a range of service information such as event announcements from associated golf courses to portable terminals 1. As a result, each player 2 can obtain a range of service information from each golf course on portable terminals 1, while establishing their relative positions to each point in a golf course accurately on a personalized basis.

Here, the present invention is not limited to the abovementioned embodiments and a range of modified embodiments is possible. For example in the abovementioned embodiments, including the modifications, the difference data calculation device is installed inside a clubhouse on a golf course. However, it may be installed in a central apparatus 21. Furthermore, the present invention can be applied as a position information providing system for places other than the golf courses in these embodiments.

## Claims

1. System for providing position information, comprising a central apparatus capable of duplex communication with a portable terminal provided with position detecting means for measuring a position thereof, **characterised in that** said central apparatus is provided with
map data control means for storing and controlling map data of a given location;
distance information providing means for deriving from a position information transmitted by said portable terminal a distance information between said portable terminal and at least one pre-assigned point, registered in said map data, and for sending said distance information to said portable terminal.

2. System for providing position information according to claim 1, wherein said position detecting means is a GPS receiver for measuring its position by receiving radio signals from satellites.

3. System for providing position information according to claim 2, **characterised by** comprising a fixed GPS receiver installed at known coordinates and adapted to receive radio signals from satellites, GPS difference data calculation means for obtaining a position error as a difference between position data obtained by said fixed GPS receiver and said coordinates of said fixed GPS receiver, and position information correction means for correcting said position information on the basis of said position error.

4. System for providing position information according to claim 1, **characterised in that** said map data control means is adapted to store and control course information of at least one golf course, said distance information providing means being adapted to calculate distance information from its position information to pre-assigned and registered points in the course information of a golf course stored in said course information control means, and sending said distance information to said portable terminal.

5. System for providing position information according to claim 4, **characterised in that** said position detecting device is a GPS receiver for measuring its position by receiving radio signals from satellites, and that it further comprises a fixed GPS receiver installed at known coordinates and adapted to receive radio signals from satellites, GPS difference data calculation means for obtaining a position error as a difference between position data obtained by said fixed GPS receiver and said coordinates of said fixed GPS receiver, and position information correction means for correcting said position information on the basis of said position error.

6. System for providing position information according to claim 4, **characterised in that** central apparatus is provided with score data access means that sums score data transmitted from each of said portable terminals, and enables each portable terminal to access the total.

7. System for providing position information according to claim 4, **characterised in that** central apparatus is provided with service information distribution means for distributing a range of service information such as event information of associated golf courses to said portable terminal.

8. System for providing position information **characterised by** comprising a central apparatus capable of duplex communication with a portable terminal provided with a GPS receiver for measuring its position by receiving radio signals from satellites, a fixed GPS receiver that is installed at known coordinates, difference data calculation means for obtaining a position error as a difference between position data obtained from said fixed GPS receiver and the coordinates of said fixed GPS receiver,
said central apparatus being provided with means for correcting a position information transmitted from a portable terminal, based on the position error calculated by said difference data calculation means, and for transmitting this corrected position information to said portable terminal,
said portable terminal is provided with
map data storage means for storing map data and
distance information outputting means for calculating distances from the corrected position information to pre-assigned and registered points in map data stored by said map data storage means, and for outputting the results.

9. System for providing position information according to claim 8, **characterised in that** said map data storage means are course information storage means for storing course information of golf courses, and said distance information outputting means are adapted to calculate distance information from its position information to pre-assigned and registered points in the course information of a golf course stored in said course information storage means, and to output the results.

10. System for providing position information according to claim 9, **characterised in that** central apparatus is provided with score data access means for summing score data transmitted from each of said portable terminals, and enabling each portable terminal to access the total.

11. System for providing position information according to claim 9, **characterised in that** central apparatus is provided with service information distribution means for distributing a range of service information such as event information of associated golf courses to said portable terminal.

12. System for providing position information **characterised by** comprising a central apparatus that is capable of duplex communication with a portable terminal provided with a GPS receiver for measuring its position by receiving radio signals from satellites, a fixed GPS receiver that is installed at known coordinates, difference data calculation means for obtaining a position error as a difference between position data obtained by said fixed GPS receiver and the coordinates of said fixed GPS receiver,
said central apparatus being provided with positioning error information transmitting means for transmitting the positioning error calculated by said difference data calculation means,
and said portable terminal containing said GPS receiver being provided with map data storage means for storing map data of a specially designated area,
position information correction means for, based on the positioning error transmitted from said central apparatus, correcting a position information within said area obtained by said GPS receiver, and
distance information outputting means for calculating distances from the corrected position information to pre-assigned and registered points in course information stored by said course information storage means and for outputting the results.

13. System for providing position information according to claim 12, **characterised in that** said position error information transmitting means transmit a position error only when the difference between said position error and a position error transmitted at a previous time exceeds a preset value.

14. System for providing position information according to claim 12, **characterised in that** said map data storage means is adapted to store course information of golf courses in said specially designated area, said distance information output means being adapted to calculate distance information from its position information to pre-assigned and registered points in the course information of golf courses stored in said course information storage means, and to output the results.

15. System for providing position information according to claim 14, **characterised in that** central apparatus is provided with score data access means for summing score data transmitted from each of said portable terminals and enabling each portable terminal to access the total.

16. System for providing position information according to claim 14, **characterised in that** central apparatus is provided with service information distribution means for distributing a range of service information such as event information of associated golf courses to said portable terminal.
